# EUROPEAN PATENT APPLICATION

(11) **EP 1 583 385 A2**
(43) Date of publication of application: **05.10.2005**
(21) Application number: 04254933.7
(22) Date of filing: 17.08.2004
(51) Int. Cl.: H04Q 7/38

(54) **Handover method and apparatus**

(30) Priority: 30.03.2004 JP 2004101104
(71) Applicant: FUJITSU LIMITED, Kanagawa 211-8588 (JP)
(72) Inventor: Hayashi, Ritsuo, Fujitsu Limited, Kawasaki-shi, Kanagawa 211-8588 (JP)
(74) Representative: Hitching, Peter Matthew

(57) **Abstract**

A handover method in which changes to be made to a communication quality conversion function in response to an addition of a new wireless access scheme can be reduced is provided. The handover method for realising handover between differing wireless access schemes for a mobile terminal having a communication function for communicating in differing wireless access schemes includes a conversion requesting step in which a handover origin wireless access scheme resource management part (50) requests a communication quality conversion part (25) to convert a user-designated communication quality into a handover destination communication quality having a format usable by a handover destination wireless access scheme resource management part (52); and a transmitting step in which the handover origin wireless access scheme resource management part (50) transmits a handover request including the handover destination communication quality provided by the communication quality conversion part to the handover destination wireless access scheme resource management part (52).

## Description

### BACKGROUND OF THE INVENTION

### 1. Field of the Invention

The present invention relates generally to a handover method and apparatus, and particularly to a technique for realizing handover between differing wireless access schemes.

### 2. Description of the Related Art

With the overwhelming proliferation of mobile communication services, the amount of traffic within a network is on the rise. To counter such effect, various new wireless access schemes are being introduced, and communication service providers are competing with each other to promote their own wireless communication schemes. Under such circumstance, handover between differing wireless access schemes are likely to occur quite frequently.

Communication quality within a network (Quality of Service (QoS) related information) is uniquely defined in each individual wireless communication scheme, and thereby, in order to ensure that the communication quality in a handover destination network is the same communication quality as that in a previous network before the handover, conversion of the communication quality (QoS related information) is required.

In conducting such handover between differing wireless access schemes, according to currently used systems and known techniques that are already patented, a conversion function for converting the communication quality (QoS related information) is provided in a pre-handover network or a handover destination network to realize the communication quality (Qos related information) conversion.

For example, Japanese Laid-Open Patent Publication No. 2000-358267 discloses a technique for converting a GMS call parameter to a UTRAN parameter at a network control apparatus of a UMTS network when executing handover between a GMS network and a UMTS network.

Also, according to the disclosure of Japanese Laid-Open Patent Publication No. 2002-525935, when a connection handover from a first mobile communication network to a second mobile communication network is conducted, a traffic class is defined at the second mobile communication network corresponding to the handover destination network, and when a connection handover from the second mobile communication network to the first mobile communication network is conducted, a traffic class is defined at the first mobile communication network corresponding to the handover destination network.

According to the prior art, when realizing handover between differing wireless access schemes, conversion of the communication quality (QoS related information) is conducted either at the pre-handover network or the handover destination network. In such an arrangement, each time a new wireless access scheme is introduced, an addition/change has to be made to the conversion format in each and every one of the networks of existing wireless access schemes to enable conversion of the communication quality defined by the new scheme, and this can be quite burdensome.

### SUMMARY OF THE INVENTION

The present invention has been developed in response to one or more problems of the related art and its object is to provide a handover method and apparatus in which changes to be made to a communication quality conversion function in response to the addition of a new wireless access scheme can be reduced.

The present invention, according to one aspect, provides a handover method for realizing handover between differing wireless access schemes for a mobile terminal with a communication function for communicating in differing wireless access schemes, the method including:
a conversion requesting step in which a handover origin wireless access scheme resource management part requests a communication quality conversion part to convert a user-designated communication quality into a handover destination communication quality having a format usable by a handover destination wireless access scheme resource management part; and
a transmitting step in which the handover origin wireless access scheme resource management part transmits a handover request including the handover destination communication quality provided by the communication quality conversion part to the handover destination wireless access scheme resource management part.

The present invention, according to another aspect, provides a handover method for realizing handover between differing wireless access schemes for a mobile terminal with a communication function for communicating in differing wireless access schemes, the method including:
a conversion algorithm requesting step in which a handover origin wireless access scheme resource management part requests a communication quality conversion function to provide a conversion algorithm for converting a user-designated communication quality into a handover destination communication quality having a format used by a handover destination wireless access scheme resource management part;
a conversion step in which the handover origin wireless access scheme resource management part converts the user communication quality into the handover destination communication quality using the conversion algorithm provided by the communication quality conversion part; and
a transmitting step in which the handover origin wireless access scheme resource management part transmits a handover request including the converted handover destination communication quality to the handover destination wireless access scheme resource management part.

The present invention, according to another aspect, provides a base station control apparatus that is connected to a mobile terminal having a communication function for communicating in differing wireless access schemes, the apparatus including:
a wireless access scheme resource management part that conducts handover of the mobile terminal between the differing wireless access schemes;
a conversion requesting part for requesting a communication quality conversion part to convert a user-designated communication quality into a handover destination communication quality having a format usable by a handover destination wireless access scheme resource management part; and
a handover requesting part that receives the handover destination communication quality from the communication quality conversion part, and transmits a handover request including the handover destination communication quality to the handover destination wireless access scheme resource management part.

The present invention, according to another aspect, provides a base station control apparatus that is connected to a mobile terminal having a communication function for communicating in differing wireless access schemes, the apparatus including:
a wireless access scheme resource management part that conducts handover of the mobile terminal between the differing wireless access schemes
a conversion algorithm requesting part that requests a communication quality conversion function to provide a conversion algorithm for converting a user-designated communication quality into a handover destination communication quality having a format usable by a handover destination wireless access scheme resource management part;
a communication quality conversion part for converting the user communication quality into the handover destination communication quality using the conversion algorithm provided by the communication quality conversion part; and
a handover requesting part for transmitting a handover request including the converted handover destination communication quality to the handover destination wireless access scheme resource management part.

According to the present invention, changes to be made to a communication quality conversion function in response to an addition of a new wireless access scheme may be reduced.

### BRIEF DESCRIPTION OF THE DRAWINGS

FIG.1 is a block diagram showing a system implementing a handover method according to an embodiment of the present invention;
FIG.2 shows an example of a QoS conversion table;
FIG.3 is a block diagram illustrating a handover method according to a first embodiment of the present invention;
FIG.4 is a flowchart illustrating the handover method of the first embodiment;
FIG.5 is a block diagram illustrating a handover method according to a second embodiment of the present invention; and
FIG. 6 is a flowchart illustrating the handover method of the second embodiment.

### DESCRIPTION OF THE PREFERRED EMBODIMENTS

In the following, preferred embodiments of the present invention are described with reference to the accompanying drawings.

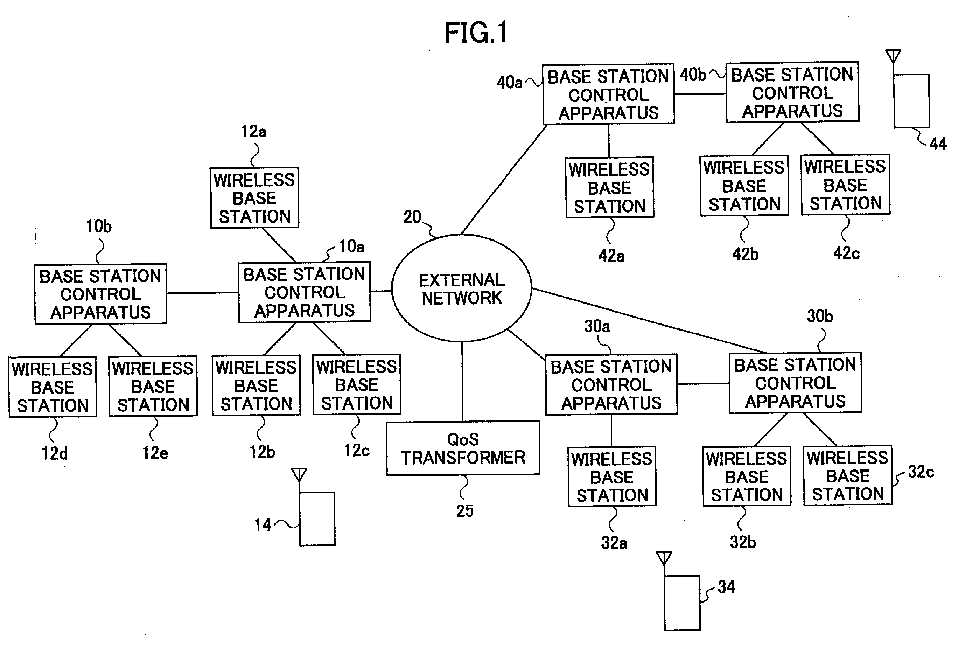

FIG.1 is a block diagram illustrating an exemplary system implementing a handover method according to an embodiment of the present invention. In the drawing, a first wireless access system includes base station control apparatuses 10a and 10b that are connected to wireless base stations 12a~12e, as illustrated. Each of the wireless base stations 12a-12e is arranged to establish wireless access with a mobile terminal 14 that resides within its cell according to a first wireless access scheme such as a DS-SS (Direct Sequence Spectrum Spread) CDMA (Code Division Multiple Access) scheme. The base station control apparatuses 10a and 10b are communicatively connected to each other, and the base station control apparatus 10a is connected to an external network 20.

A second wireless access system includes base station control apparatuses 30a and 30b that are connected to wireless base stations 32a~32c, as illustrated. Each of the wireless base stations 32a-32c is arranged to establish wireless access with a mobile terminal 34 that resides within its cell according to a second wireless access scheme such as a multi-carrier CDMA scheme. The base station control apparatuses 30a and 30b are communicatively connected to each other, and the base station control apparatuses 30a and 30b are each communicatively connected to the external network 20.

A third wireless access system includes base station control apparatuses 40a and 40b that are connected to wireless base stations 42a~42c, as illustrated. Each of the wireless base stations 42a-42c is arranged to establish wireless access with a mobile terminal 44 that resides within its cell according to a third wireless access scheme such as a CDMA-TDD (Time Division Dultiplex) scheme. The base station control apparatuses 40a and 40b are communicatively connected to each other, and the base station control apparatus 40a is communicatively connected to the external network 20.

Each of the mobile terminals 14, 34, and 44 has the ability to inform a wireless base station control apparatus of its reception state and the service it intends to use before establishing communication. That is, control apparatus side may be informed of the communication quality that is required by the requested service before starting the service. Also, each of the mobile terminals 14, 34, and 44 has the ability to communicate in each of the different first, second, and third wireless access schemes.

Each of the base station control apparatuses 10a, 10b, 30a, 30b, 40a, and 40b has an RRM (Radio Resource Management) function. The RRM function enables the base station control apparatus to determine the states of wireless resources of the wireless access scheme it manages. Also, when executing handover to a different wireless access scheme, in order to ensure the same communication quality at a handover destination, each base station control apparatus may have a function for requesting a QoS transformer 25 to convert a currently used QoS into a QoS defined by a wireless access scheme that is supported by the handover destination, and/or a function for requesting the QoS transformer 25 to send a conversion algorithm for realizing such a conversion to execute the conversion at its own apparatus. In the case where the base station control apparatus is arranged to receive a conversion algorithm from the QoS transformer 25, the base station control apparatus may convert a current QoS into a format defined by the wireless access scheme of the handover destination using the received algorithm.

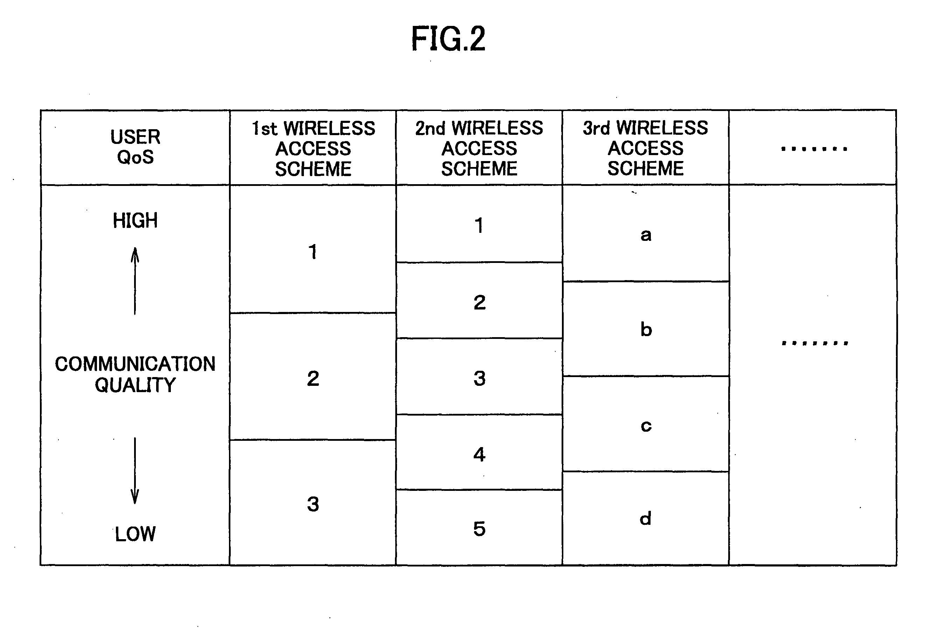

The external network 20 is connected to the QoS transformer 25, which in one embodiment corresponds to a conversion function for converting communication qualities that differ according to each wireless access scheme. In each communication quality defined by each wireless access scheme (i.e. , QoS), factors such as delay time, jitter, and error rate are arranged to have predetermined ranges, and each QoS has a function similar to that of a DiffServ (Differentiated Service) packet classifier provided in the Internet. The QoS transformer 25 may store a QoS conversion table such as that shown in FIG.2 indicating the correspondence between user QoS information and QoS information according to the first, second, and third wireless access schemes. In an embodiment, the user QoS information corresponds to committed communication quality information that is designated by the user at the time of establishing connection.

Referring to FIG.2, according to the first wireless access scheme, the QoS value is within a range of 1∼3, and for example, QoS=1 may be assigned to moving image data, QoS=2 may be assigned to audio data, and QoS=3 may be assigned to message data. Also, according to the second wireless access scheme, the QoS value is within a range of 1∼5, and according to the third wireless access scheme, the QoS value is within a range of a~d.

The QoS transformer 25 may include a conversion algorithm for converting a QoS defined by one wireless access scheme into a QoS defined by another wireless access scheme, and a function for transmitting the converted QoS . Also, or alternatively, the QoS transformer 25 may include a function for transmitting the conversion algorithm to a base station control apparatus that requests for such information.

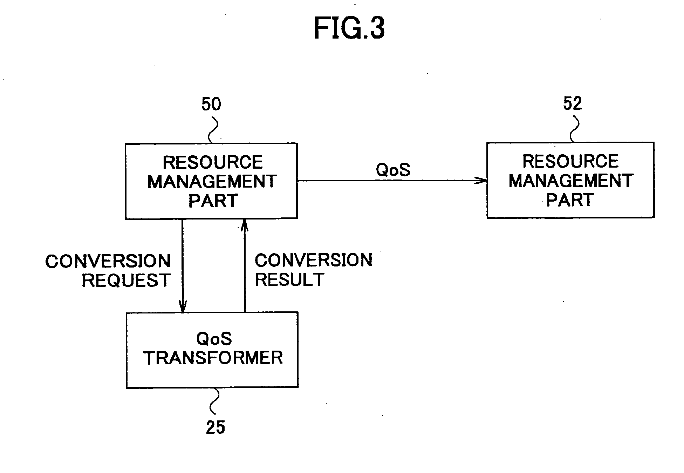

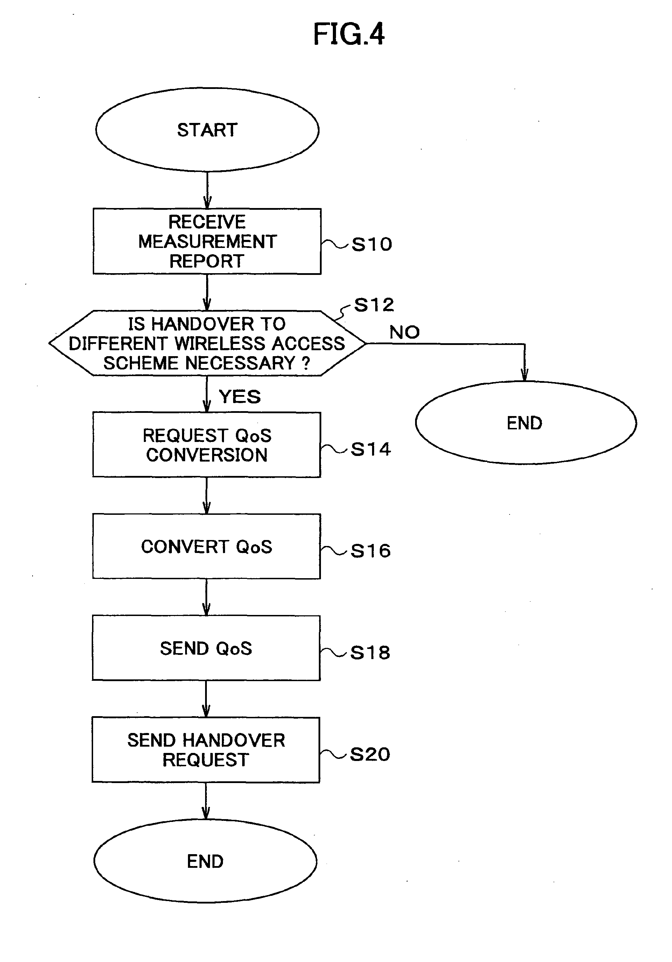

FIG.3 is a block diagram illustrating a handover method according to a first embodiment of the present invention, and FIG.4 is a flowchart illustrating the handover method according to the first embodiment.

Referring to these drawings, a resource management part 50 of a base station control apparatus that realizes the RRM function of the base station control apparatus for managing resources of a wireless access scheme receives from a mobile terminal a measurement report that includes a reception state of the mobile terminal (step S10) . The resource management part 50 then determines whether handover of the mobile terminal to a different wireless access scheme is necessary based on the received measurement report (step S12).

If the measurement report includes radio intensity information received from a wireless base station of a different wireless access scheme that is not managed by this resource management part 50, and if the resource management part 50, upon analyzing this information, determines that handover to a different wireless access scheme that is managed by a different resource management part 52 is appropriate, the process moves to step S14.

In step S14, in order to secure a QoS in the handover destination that is of the same level as the pre-handover QoS, the resource management part 50 sends a conversion request to the QoS transformer 25 requesting for the user QoS information to be converted into the format used by the resource management part 52 that manages resources of the wireless access scheme of the handover destination.

The QoS transformer 25 executes the conversion using a QoS conversion table (step S16) such as the QoS conversion table shown in FIG.2. That is, in response, for example, to the request made by the resource management part 50 in step S14, the QoS transformer 25 converts the user QoS information into a format that may be used by the resource management part 52 of the handover destination. Then, the Qos transformer 25 sends the converted QoS to the resource management part 50 (step S18).

In turn, the resource management part 50 sends a handover request including the converted QoS received from the QoS transformer 25 to the resource management part 52 of the handover destination (step S20).

According to the present embodiment, when a new wireless access scheme is introduced, an addition/change is made to the QoS conversion table of the QoS transformer 25, but the addition/change does not necessarily have to be made to a communication quality conversion function of each of the resource management parts of the base station control apparatuses 10a, 10b, 30a, 30b, 40a, and 40b. In this way, the burden of making additions/changes may be reduced, and new wireless access schemes may be introduced to the mobile communication network without having to consider possible influences on the existing infrastructure.

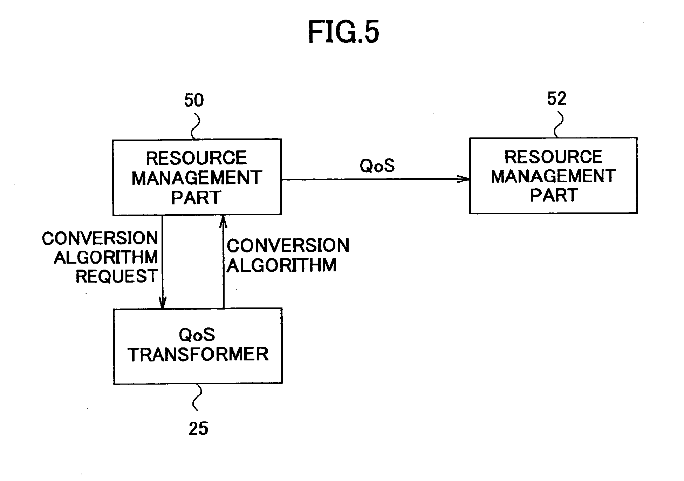

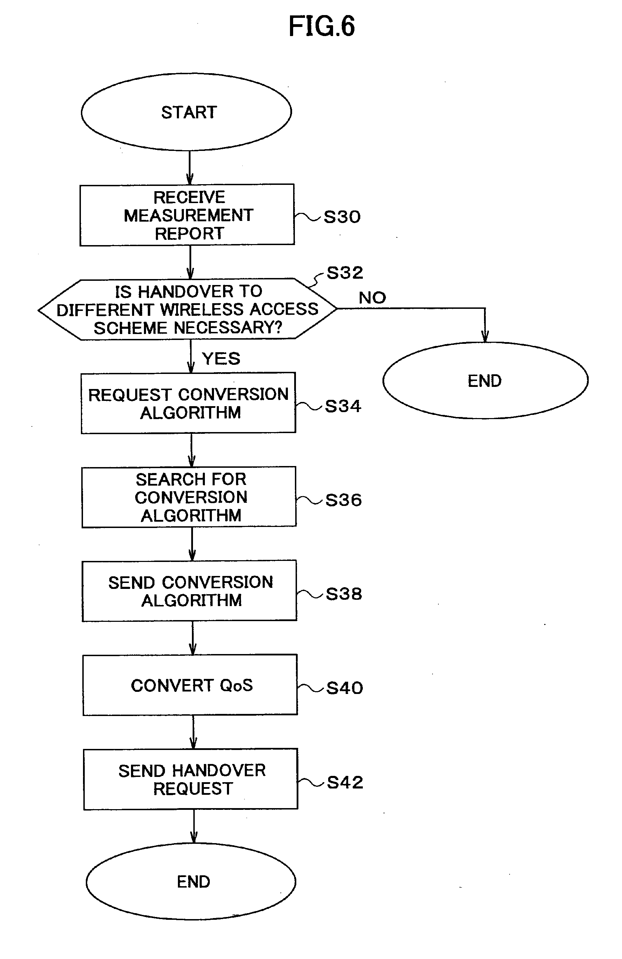

FIG.5 is a block diagram illustrating a handover method according to a second embodiment of the present invention, and FIG.6 is a flowchart illustrating the handover method according to the second embodiment.

According to these drawings, a resource management part 50 of a base station control apparatus that realizes the RRM function of the base station control apparatus for managing resources of a wireless access scheme receives from a mobile terminal a measurement report including a reception state of the mobile terminal (step S30). The resource management part 50 determines whether handover of the mobile terminal to a different wireless access scheme is necessary based on the measurement report (step S32).

If the measurement report includes radio intensity information received from a wireless base station of a different wireless access scheme that is not managed by the resource management part 50, and if the resource management part 50, upon analyzing the information, determines that handover to a different wireless access scheme managed by the resource management part 52 is appropriate, the process moves to step S34.

In step S34, in order to secure a QoS at the handover destination that is of the same level as the pre-handover QoS, the resource management part 50 requests the QoS transformer 25 to send a conversion algorithm for converting the user QoS information into a format used by the resource management part 52 that manages the resources of the wireless access scheme of the handover destination.

In turn, the QoS transformer 25 searches for the conversion algorithm requested by the resource management part 50 in step S34 for converting the user QoS information into the format used by the resource management part 52 of the handover destination (step S36).

The QoS transformer 25 transmits the searched out conversion algorithm to the resource management part 50 (step S38).

The resource management part 50 uses the received conversion algorithm to convert the user QoS information into the format used by the resource management part 52 (step S40).

Then the resource management part 50 sends a handover request including the converted QoS to the resource management part 52 of the handover destination (step S42) .

In the resource management part 50, after using the conversion algorithm received from the QoS transformer, the conversion algorithm may be kept for a predetermined period of time so that it may be re-used in a next handover process. Alternatively, the conversion algorithm may be discarded once it is used, and the resource management part 50 may request the QoS transformer 25 to send the conversion algorithm again upon realizing a next handover process.

According to the present embodiment, when a new wireless access scheme is introduced, an addition/change is made to a conversion algorithm of the QoS transformer 25, but the addition/change does not necessarily have to be made to the communication quality conversion function of each of the resource management parts of the base station control apparatuses 10a, 10b, 30a, 30b, 40a, and 40b. In this way, the burden of making additions/changes may be reduced, and new wireless access schemes may be introduced to the mobile communication network without having to consider possible influences on the existing infrastructure. It is also noted that in this embodiment, the QoS transformer 25 does not have to include a conversion table such as that shown in FIG. 2, and the burden of making additions/changes when a new wireless access scheme is introduced may be further reduced.

It is noted that the QoS transformer 25 does not necessarily have to be connected to the external network 20; rather, the QoS transformer 25 may be placed anywhere as long as it may be accessible to each of the base station control apparatuses of the different wireless access schemes. For example, the QoS transformer 25 may be provided within a base station control apparatus of a given wireless access system.

## Claims

1. A handover method for realizing handover between differing wireless access schemes for a mobile terminal having a communication function for communicating in differing wireless access schemes, the method **characterized by**:
a conversion requesting step in which a handover origin wireless access scheme resource management part requests a communication quality conversion part to convert a user-designated communication quality into a handover destination communication quality having a format usable by a handover destination wireless access scheme resource management part; and
a transmitting step in which the handover origin wireless access scheme resource management part transmits a handover request including the handover destination communication quality provided by the communication quality conversion part to the handover destination wireless access scheme resource management part.

2. A handover method for realizing handover between differing wireless access schemes for a mobile terminal having a communication function for communicating in differing wireless access schemes, the method **characterized by**:
a conversion algorithm requesting step in which a handover origin wireless access scheme resource management part requests a communication quality conversion part to provide a conversion algorithm for converting a user-designated communication quality into a handover destination communication quality having a format usable by a handover destination wireless access scheme resource management part;
a conversion step in which the handover origin wireless access scheme resource management part converts the user communication quality into the handover destination communication quality using the conversion algorithm provided by the communication quality conversion part; and
a transmitting step in which the handover origin wireless access scheme resource management part transmits a handover request including the converted handover destination communication quality to the handover destination wireless access scheme resource management part.

3. A base station control apparatus that is connected to a mobile terminal having a communication function for communicating in differing wireless access schemes, the apparatus comprising a wireless access scheme resource management part that conducts handover of the mobile terminal between the differing wireless access schemes, **characterized by**:
a conversion requesting part that requests a communication quality conversion part to convert a user-designated communication quality into a handover destination communication quality having a format usable by a handover destination wireless access scheme resource management part; and
a handover requesting part that receives the handover destination communication quality from the communication quality conversion part, and transmits a handover request including the handover destination communication quality to the handover destination wireless access scheme resource management part.

4. The base station control apparatus as claimed in claim 3, further comprising a determination part for determining whether handover to a different wireless access scheme is necessary based on information received from the mobile terminal pertaining to a reception state of the mobile terminal.

5. The base station control apparatus as claimed in claim 3, wherein the communication quality conversion part includes a conversion table for realizing communication quality conversion between the user communication quality and the handover destination communication quality.

6. A base station control apparatus that is connected to a mobile terminal having a communication function for communicating in differing wireless access schemes, the apparatus comprising a wireless access scheme resource management part that conducts handover of the mobile terminal between the differing wireless access schemes, **characterized by**:
a conversion algorithm requesting part that requests a communication quality conversion part to provide a conversion algorithm for converting a user-designated communication quality into a handover destination communication quality having a format usable by a handover destination wireless access scheme resource management part;
a communication quality conversion part that converts the user communication quality into the handover destination communication quality using the conversion algorithm provided by the communication quality conversion part; and
a handover requesting part that transmits a handover request including the converted handover destination communication quality to a handover destination wireless access scheme resource management part.

7. The base station control apparatus as claimed in claim 6, further comprising a determination part for determining whether handover to a different wireless access scheme is necessary based on information received from the mobile terminal pertaining to a reception state of the mobile terminal.

8. A handover method for realizing handover between differing wireless access schemes for a mobile terminal having a communication function for communicating in differing wireless schemes, the method **characterized by**:
determining whether handover from a handover origin wireless access scheme resource management function to a handover destination wireless access scheme resource management function is necessary based on information received from the mobile terminal pertaining to a reception state of the mobile terminal;
wherein, if it is determined that handover is necessary, the handover origin wireless access scheme resource management function
requests a communication quality conversion part to convert a user communication quality into a handover destination communication quality having a format usable by the handover destination wireless access scheme resource management function, and
transmits the handover destination communication quality to the handover destination wireless access scheme resource management function.

9. The handover method as claimed in claim 8, wherein, if it is determined that handover is not necessary, then the steps of requesting and transmitting are skipped.

10. A handover method for realizing handover between differing wireless access schemes for a mobile terminal having a communication function for communicating in differing wireless schemes, the method **characterized by**:
determining whether handover from a handover origin wireless access scheme resource management function to a handover destination wireless access scheme resource management function is necessary based on information received from the mobile terminal pertaining to a reception state of the mobile terminal;
wherein, if it is determined that handover is necessary, the handover origin wireless access scheme resource management function
requests a communication quality conversion part to provide a conversion algorithm for converting a user communication quality into a handover destination communication quality having a format usable by the handover destination wireless access scheme resource management function,
converts the user communication quality into the handover destination communication quality using the conversion algorithm; and
transmits the handover destination communication quality to the handover destination wireless access scheme resource management function.

11. The handover method as claimed in claim 10, wherein, if it is determined that handover is not necessary, then the steps of requesting and transmitting are skipped.
